# EUROPÄISCHE PATENTANMELDUNG

(11) **EP 1 065 769 A1**
(43) Veröffentlichungstag der Anmeldung: **03.01.2001**
(21) Anmeldenummer: 99112543.6
(22) Anmeldetag: 01.07.1999
(51) Int. Cl.: H02G 1/00

(54) **Montagehilfe für Unterputzdosen und Verfahren zum Montieren von Unterputzdosen**

(71) Anmelder: B.P.A. Agence Immobilière S.a.r.l., 8819 Heispelt (LU)
(72) Erfinder: Ihry, Romain, 8819 Heispelt (LU)
(74) Vertreter: Schmitt, Armand

(57) **Zusammenfassung**

Montagehilfe für Unterputzdosen umfassend eine Tragvorrichtung auf der mindestens ein Formteil zum Befestigen einer Unterputzdose angebracht ist und Befestigungsmittel um die Tragvorrichtung an einer Wand zu befestigen.

## Beschreibung

Die vorliegende Erfindung betrifft eine Montagehilfe für Unterputzdosen, sowie ein Verfahren zum Montieren von Unterputzdosen mittels der Montagehilfe.

Sowohl beim Neubau als auch beim Renovieren von Gebäuden werden Unterputzdosen für z.B. Schalter und Steckdosen in die Wände eingebaut. Nachdem die Löcher für die Unterputzdosen und die Kanäle für die Kabel in die Wand geschlagen oder geschnitten wurden, können die Unterputzdosen eingesetzt werden. Hierzu wird die Unterputzdose zuerst mit ein wenig Gips in das dafür vorgesehene Loch eingeklebt, um so die Unterputzdose in der Wand zu befestigen. Erst wenn dieser Gips trocken ist, können die Kabel in die Unterputzdose eingeführt werden, andernfalls besteht die Gefahr, daß die Unterputzdose verrutscht. Nachdem die Kabel in die Unterputzdose eingeführt wurden, wird das Loch rund um die Unterputzdose mit Gips, Zementputz oder dergleichen ausgespachtelt.

Dieser Arbeitsvorgang ist ziemlich aufwendig, da man die Unterputzdose zuerst mit ein wenig Gips 'einkleben' muß bevor man die Kabel einführen kann. Es ist auch äußerst schwierig die Unterputzdosen mit dieser Methode sauber einzusetzen, denn solange der Gips nicht trocken ist kann die Unterputzdose leicht verrutschen. Auch ist es nicht immer einfach mehrfache Dosen sauber auszurichten.

Aufgabe der vorliegenden Erfindung ist es folglich, eine Montagehilfe vorzuschlagen die es ermöglicht Unterputzdosen schnell, einfach und sauber einzubauen.

Diese Aufgabe wird erfindungsgemäß durch eine Montagehilfe nach Anspruch 1 gelöst.

Eine solche Montagehilfe ermöglicht es, eine Unterputzdose einfach, schnell und sauber in eine Wand einzusetzen. Die einzubauende Unterputzdose wird auf ein Formteil der Montagehilfe aufgesteckt und in ein dafür vorgesehenes Loch in der Wand gesetzt. Das Formteil ist auf einer Tragvorrichtung befestigt. Letztere wird mittels Befestigungsmittel an der Wand befestigt, so daß die Unterputzdose in der gewünschten Position gehalten wird. Die Unterputzdose braucht daher nicht mit Gips 'eingeklebt' zu werden. Die benötigten Kabel können somit gleich nach der Befestigung der Montagehilfe an der Wand in die Unterputzdose eingeführt werden. Da die Unterputzdose mittels der Montagehilfe von 'außen' gehalten wird, hat man beim Einführen der Kabel von allen Seiten Zugriff auf die Unterputzdose. Dies macht das Einführen der Kabel einfacher und bequemer. Die Unterputzdose wird erst nach dem Einführen der benötigten Kabel mit Gips, Montageschaum, Zementputz oder dergleichen in die Wand eingebaut, bevor die Montagehilfe entfernt wird. Hierdurch wird eine deutliche Reduzierung der Arbeitszeit erreicht. Die Montagehilfe verhindert ein Verrutschen der Unterputzdose während des ganzen Arbeitsvorganges. Da die Montagehilfe an der Wand befestigt wird, kann die Unterputzdose weder beim Einführen der Kabel, noch beim endgültigen Befestigen der Dose verrutschen. Wird die Montagehilfe für den Einbau von mehreren Unterputzdosen benutzt, können letztere mittels einer Wasserwaage, die einfach auf die Tragvorrichtung aufgelegt wird, horizontal, bzw. vertikal ausgerichtet werden und durch die Befestigungsmittel in dieser Position gehalten werden.

Das Formteil ist vorzugsweise der Form der Unterputzdose angepaßt. Die Unterputzdose kann z.B. eine runde Unterputz-Anschlußdose oder eine quadratische Unterputz-Verteilerdose sein. Die Unterputzdose soll fest auf dem Formteil aufsitzen, so daß sie während des Arbeitsvorganges nicht verrutschen kann.

In einer bevorzugten Ausführung sind auf der Tragvorrichtung mehrere Formteile so angebracht, daß mehrere ineinandergesteckte Unterputzdosen auf die Tragvorrichtung aufgesteckt werden können. Dies ermöglicht es mehrere Unterputzdosen nebeneinander in einer Wand einzusetzen.

Die Tragvorrichtung weist vorteilhaft an einem ersten und einem zweiten Ende jeweils einen Distanzhalter auf. Diese Distanzhalter ermöglichen es die Tragvorrichtung auf einer bestimmten Distanz von der Wand zu halten. Die Unterputzdose kann somit auf die richtige Tiefe in der Wand positioniert werden, auch wenn die Wand erst nachträglich verputzt wird.

In einer bevorzugten Ausgestaltung sind die Distanzhalter mit der Tragvorrichtung austauschbar verbunden. Distanzhalter in unterschiedlichen Größen können z.B. auf die Tragvorrichtung aufgeschoben werden. In einer anderen bevorzugten Ausgestaltung sind die Distanzhalter z.B. mittels einer Stellschraube höhenverstellbar. Die Distanz zwischen der Mauer und der Tragvorrichtung kann hierdurch kontinuierlich eingestellt werden. Durch die austauschbaren, bzw. verstellbaren Distanzhalter läßt sich die Distanz zwischen der rohen und der fertigen Wand einstellen. Dieselbe Montagehilfe kann also beim Einsetzen von Unterputzdosen sowohl in eine fertig verputzte Wand als auch in eine Wand die erst nachträglich verputzt wird, verwendet werden.

Die Befestigungsmittel zum Befestigen der Montagehilfe an der Wand können z.B. Schrauben, Nägel, Einschlaghaken oder dergleichen sein.

In einer bevorzugten Ausführung umfaßt die Tragvorrichtung einen Längsbalken und einen Querbalken. Der Querbalken ist vorzugsweise im wesentlichen rechtwinklig mit dem Längsbalken abnehmbar verbunden. Hierzu weist der Querbalken z.B. einen Spalt auf in den der Längsbalken eingeschoben werden kann. Je nachdem von welcher Seite die Kabel in die Unterputzdose eingeführt werden, wird ein Befestigen des Längsbalken durch die Kabelführung unmöglich gemacht. Die Montagehilfe kann dann mittels Querbalken an der Wand befestigt werden. Hierdurch werden die Einsatzmöglichkeiten der Montagehilfe erhöht.

In einer bevorzugten Ausführung ist mindestens eine Wasserwaage an der Montagehilfe angebracht um das Ausrichten der Dosen zu erleichtern. Die Wasserwaage kann z.B. parallel zum Längsbalken in letzterem eingebettet sein. Eine zweite Wasserwaage kann quer zum Längsbalken in letzterem eingebettet sein. Hierdurch wird das horizontale und vertikale Ausrichten von Mehrfachdosen deutlich erleichtert.

Die Montage von Unterputzdosen unter Benutzung der erfindungsgemäßen Montagehilfe wird vorteilhaft nach einem Verfahren vorgenommen, das folgende Schritte umfaßt: ein Aufstecken der Unterputzdose(n) auf die Montagehilfe; Ausrichten der Montagehilfe an der Wand; Befestigen der Montagehilfe an der Wand; Einführen der Kabel; Eingipsen der Unterputzdosen(n); und Abnehmen der Montagehilfe. Bei diesem Verfahren wird kein Gips oder dergleichen benutzt um eine Unterputzdose in einem Loch zu befestigen. Erst nach dem Einführen der Kabel wird die Unterputzdose von den Seiten mit Gips umgeben.

Vorzugsweise werden nach dem Aufstecken der Unterputzdose(n) auf die Montagehilfe jedoch vor dem Positionieren der Montagehilfe an der Wand die Distanzhalter ausgewählt und aufgesteckt, bzw. eingestellt. Beim Montieren von Unterputzdosen in eine Rohwand, d.h. in eine Wand die noch zu verputzen ist, kann die Einbautiefe so eingestellt werden, daß der Dosenrand nach dem verputzen der Wand bündig in der verputzten Oberfläche liegt.

Beim Montieren von Mehrfachdosen wird vorzugsweise eine Wasserwaage benutzt um die Dosen in eine Ebene zu bringen. Hierzu kann man entweder eine auf die Tragvorrichtung gelegte Wasserwaage, oder eine in die Tragvorrichtung eingebettete Wasserwaage benutzen.

Nachdem die Tragvorrichtung ausgerichtet worden ist, wird sie an der Wand befestigt, damit die Tragvorrichtung, und somit die Unterputzdose(n), nachträglich nicht verrutschen kann. Die Tragvorrichtung kann mit allen bekannten Befestigungsmittel an der Wand befestigt werden, vorzugsweise werden Schrauben oder Einschlaghaken benutzt, wobei die Schrauben z.B. an zwei Enden durch die Tragvorrichtung dringen und dann in der Wand eingedreht werden, und wobei die Einschlaghaken unter der Tragvorrichtung eingeschlagen werden.

Nach dem Einführen der Kabel, kann die Unterputzdose in der Wand eingebaut werden. Mit Füllmasse, wie z.B. Gips, Montageschaum, oder Zementputz, wird das Loch in der Wand rund um die Unterputzdose aufgefüllt.

Nach dem Aushärten der Füllmasse kann die Montagehilfe von der Wand abgenommen werden.

Im folgenden wird nun eine Ausgestaltung der Erfindung anhand der beiliegenden Figuren beschrieben. Es zeigen:
- Fig. 1:: Draufsicht von oben auf eine Montagehilfe für bis zu drei Unterputz-Anschlußdosen
- Fig. 2:: Seitenansicht einer Montagehilfe für bis zu drei Unterputz-Anschlußdosen
- Fig. 3:: Draufsicht von unten auf eine Montagehilfe für bis zu drei Unterputz-Anschlußdosen
- Fig. 4:: Seitenansicht eines Querbalkens
- Fig. 5:: Draufsicht von oben auf eine Montagehilfe für eine Unterputz-Verteilerdose
- Fig. 6:: Seitenansicht einer Montagehilfe für eine Unterputz-Verteilerdose
- Fig. 7:: Draufsicht von unten auf eine Montagehilfe für eine Unterputz-Verteilerdose
- Fig. 8:: Seitenansicht eines abnehmbaren Distanzhalters

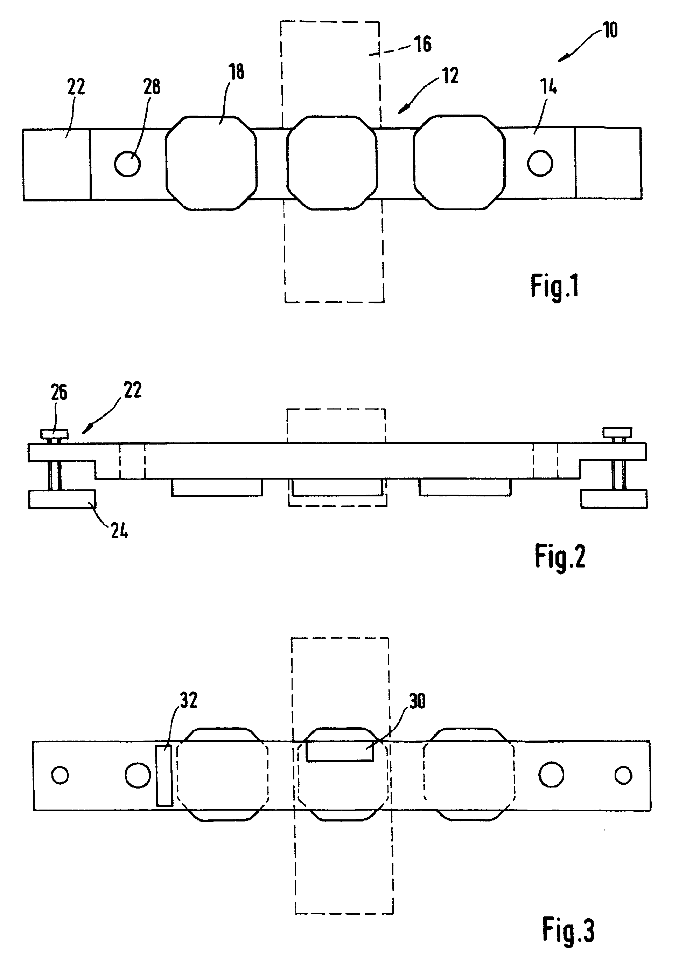

Figur 1, 2 und 3 zeigen eine Montagehilfe 10 zum Montieren von bis zu drei Unterputz-Anschlußdosen. Eine Tragvorrichtung 12 besteht aus einem Längsbalken 14 und einem Querbalken 16. Auf dem Längsbalken sind drei Formteile 18 angebracht, auf die die Unterputzdosen aufgesteckt werden. Der Querbalken 16 ist in Figur 1, 2 und 3 gestrichelt dargestellt, da es sich hierbei um ein abnehmbares Element handelt das nur in besonderen Montagesituationen benötigt wird.

Die Formteile sind an den Querschnitt der Unterputz-Anschlußdosen angepaßt, so daß letztere reibschlüssig auf den Formteilen aufsitzen. Um Mehrfachdosen zu bilden, werden die Unterputz-Anschlußdosen mit ihren Verbindungsteilen ineinandergesteckt. Die Formteile sind auf dem Längsbalken so befestigt, daß die ineinandergesteckte Dosenkombination auf die Montagehilfe gesteckt werden kann.

An den jeweiligen Enden des Längs- und Querbalkens sind Distanzhalter 22 angebracht. Aus Figur 2 ist ersichtlich, daß die Distanzhalter 22 eine Distanzplatte 24 und eine Stellschraube 26 umfassen. Die Distanzplatte kann in einem Bereich von 0 bis 3 cm kontinuierlich mittels der Stellschraube verstellt werden. In der 0 cm Position ist die Distanzplatte ganz in den Längsbalken eingeführt; die Unterseite der Distanzplatte und die Unterseite des Längsbalken sind in einer Ebene. Diese Einstellung wird z.B. benutzt um Unterputzdosen in eine fertig verputzte Wand einzubauen. Um Unterputzdosen in eine Wand einzubauen die erst nachträglich verputzt werden soll, werden die Distanzplatten heraus gedreht. In der Regel wird 1 cm Gips auf die Wand aufgetragen, d.h. die Distanzplatten werden um 1 cm heraus gedreht, um so einen Abstand von 1 cm zwischen der Wand und der Unterputzdosenrand zu schaffen. Nach dem Verputzen der Wand ist dann die Unterputzdosenrand mit der Wand in einer Ebene.

Zwischen den Distanzhaltern 22 und den Formteilen 18 weist der Längsbalken Bohrungen 28 auf, durch die Befestigungsschrauben zum Befestigen der Montagehilfe an einer Wand, geführt werden können. Zur Befestigung der Montagehilfe an der Wand, werden Löcher in die Wand gebohrt, Dübel eingesetzt und durch die Bohrungen Schrauben eingedreht. Anstatt von Schrauben können zur Befestigung der Montagehilfe an der Wand auch z.B. Einschlaghaken benutzt werden. In diesem Falle werden die Bohrungen nicht gebraucht, da die Einschlaghaken unter dem Längsbalken in die Wand eingeschlagen werden um die Montagehilfe zu halten.

Der Längsbalken 14 weist Wasserwaagen 30 resp. 32 auf, um die Unterputzdosen in eine horizontale resp. vertikale Ebene zu bringen. Diese Wasserwaagen sind in dem Längsbalken eingebettet.

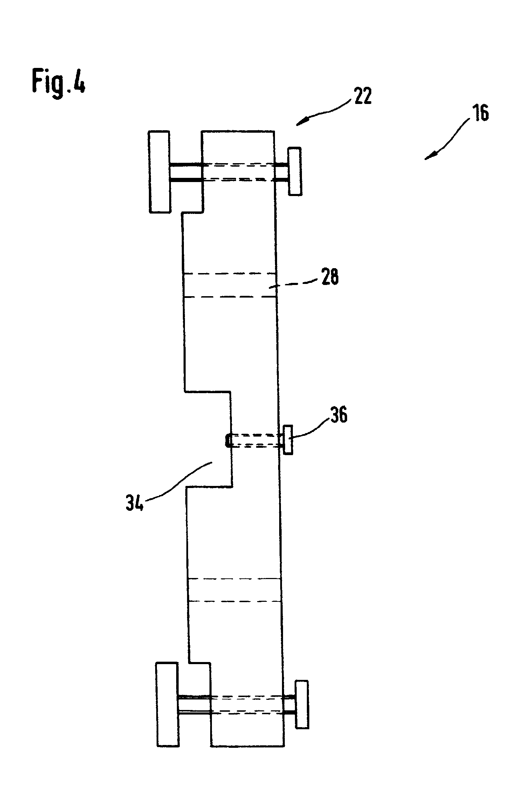

Der in Figur 1, 2 und 3 gestrichelt dargestellte Querbalken wird in Figur 4 näher gezeigt.

Der Querbalken weist eine Führungsnut 34 auf, um den Längsbalken zu empfangen. Längs- und Querbalken können ggf. mittels einer Schraube 36 miteinander verbunden werden.

So wie der Längsbalken, weist der Querbalken ebenfalls Distanzhalter 22 auf, um die Montagehilfe auf den richtigen Abstand von der Wand einzustellen, sowie Bohrungen 28 zum Befestigen des Querbalkens an einer Wand.

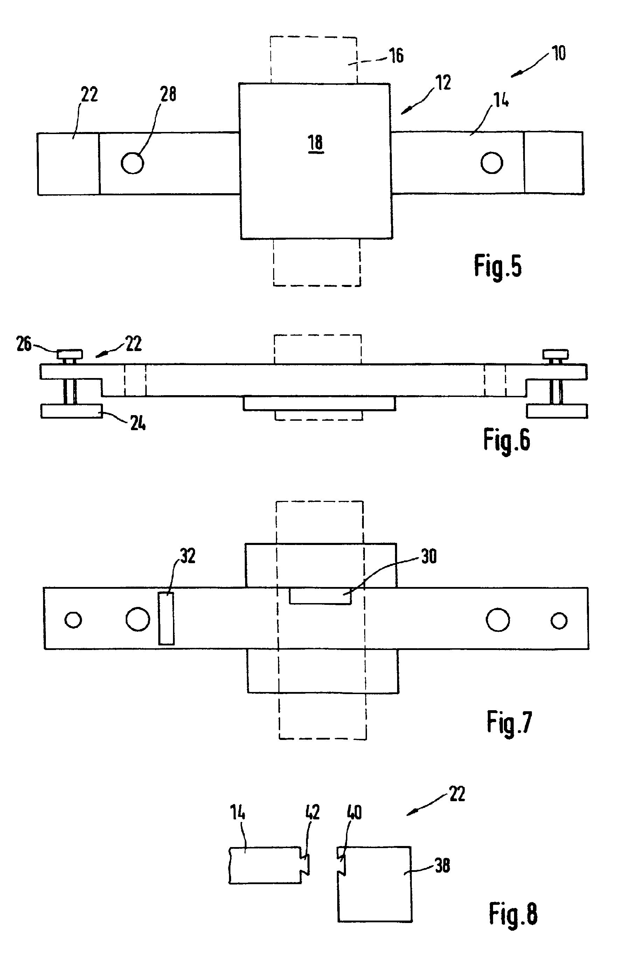

Figuren 5, 6 und 7 zeigen eine Montagehilfe 10 zum Montieren von einer Unterputz-Verteilerdosen. Eine Tragvorrichtung 12 besteht aus einem Längsbalken 14 und einem Querbalken 16. Auf dem Längsbalken ist ein Formteil 18 angebracht, auf die die Unterputzdose aufgesteckt wird. Der Querbalken 16 ist auf den Figuren 5, 6 und 7 gestrichelt dargestellt, da es sich hierbei um ein abnehmbares Element handelt das nur in besonderen Montagesituationen benötigt wird. Das Formteil sind an die Unterputz-Verteilerdose angepaßt, so daß letztere reibschlüssig auf dem Formteil aufsitzt. Bei Verwendung von Unterputz-Verteilerdosen wird ein quadratisches Formteil benutzt.

Figur 8 zeigt eine alternative zu den einstellbaren Distanzhaltern. Der Distanzhalter besteht aus einem Distanzblock 38 der mit einer Nut 40 versehen ist. Der Längsbalken 14 ist an den Enden mit einer Feder versehen. Der Distanzblock kann einfach auf den Längsbalken aufgeschoben werden. Distanzblöcke unterschiedlicher Größe können auf den Längsbalken aufgeschoben werden, um so unterschiedliche Abstände zwischen der Wand und dem Unterputzdosenrand zu schaffen.

## Patentansprüche

1. Montagehilfe (10) für Unterputzdosen **gekennzeichnet durch**
- mindestens ein Formteil (18) zum Befestigen einer Unterputzdose;
- eine Tragvorrichtung (12) auf der das mindestens eine Formteil angebracht ist; und
- Befestigungsmittel um die Tragvorrichtung an einer Wand zu befestigen.

2. Montagehilfe gemäß Anspruch 1, dadurch gekennzeichnet, daß das Formteil derart ausgebildet ist, daß es eine Unterputzdose formschlüssig erfaßt.

3. Montagehilfe gemäß einem der Ansprüche 1 bis 2, dadurch gekennzeichnet, daß mehrere Formteile auf der Tragvorrichtung angebracht sind.

4. Montagehilfe gemäß Anspruch 3, dadurch gekennzeichnet, daß die Formteile so auf der Tragvorrichtung angebracht sind, daß mehrere ineinandergesteckte Unterputzdosen auf die Tragvorrichtung passen.

5. Montagehilfe gemäß einem der vorhergehenden Ansprüche, dadurch gekennzeichnet, daß die Tragvorrichtung an einem ersten und einem zweiten Ende jeweils einen Distanzhalter (22) aufweist.

6. Montagehilfe gemäß Anspruch 5, dadurch gekennzeichnet, daß die Distanzhalter abnehmbar mit der Tragvorrichtung verbunden sind.

7. Montagehilfe gemäß einem der Ansprüche 5 bis 6, dadurch gekennzeichnet, daß die Distanzhalter auf die Tragvorrichtung aufschiebbar sind.

8. Montagehilfe gemäß Anspruch 5, dadurch gekennzeichnet, daß die Distanzhalter höhenverstellbar sind.

9. Montagehilfe gemäß Anspruch 8, dadurch gekennzeichnet, daß die Distanzhalter mittels einer Stellschraube (26) höhenverstellbar sind.

10. Montagehilfe gemäß einem der vorhergehenden Ansprüche, dadurch gekennzeichnet, daß die Tragvorrichtung einen Längsbalken (14) und einen Querbalken (16) aufweist.

11. Montagehilfe gemäß Anspruch 10, dadurch gekennzeichnet, daß der Querbalken abnehmbar am Längsbalken befestigt wird.

12. Montagehilfe gemäß einem der Ansprüche 10 bis 11, dadurch gekennzeichnet, daß der Querbalken im wesentlichen rechtwinklig zum Längsbalken befestigt wird.

13. Montagehilfe gemäß einem der vorhergehenden Ansprüche, dadurch gekennzeichnet, daß die Montagehilfe mindestens eine Wasserwaage (30, 32) aufweist.

14. Verfahren für die Montage von Unterputzdosen, umfassend folgende Schritte:
(a) Aufstecken einer Unterputzdose auf ein Formteil einer Montagehilfe nach einem der Ansprüche 1 bis 13;
(b) Ausrichten der Montagehilfe an einer Wand;
(c) Befestigen der Montagehilfe an der Wand;
(d) Einführen von Kabel;
(e) Einbauen der Unterputzdose; und
(f) Abnehmen der Montagehilfe.

15. Verfahren für die Montage von Unterputzdosen, gemäß Anspruch 14, dadurch gekennzeichnet, daß eine Wasserwaage beim Positionieren der Montagehilfe, Schritt (b), auf die Tragvorrichtung aufgelegt wird, um die Unterputzdosen in eine Ebene zu bringen.

16. Verfahren für die Montage von Unterputzdosen, gemäß einem der Ansprüche 14 bis 15, dadurch gekennzeichnet, daß die Montagehilfe mittels Schrauben an der Wand befestigt wird.

17. Verfahren für die Montage von Unterputzdosen, gemäß einem der Ansprüche 14 bis 15, dadurch gekennzeichnet, daß die Montagehilfe mittels Einschlaghaken an der Wand befestigt wird.

18. Verfahren für die Montage von Unterputzdosen, gemäß einem der Ansprüche 14 bis 17, dadurch gekennzeichnet, daß die Unterputzdosen, nach dem Einführen der Kabel, mit Füllmasse in die Wand eingebaut werden.

19. Verfahren für die Montage von Unterputzdosen, gemäß einem der Ansprüche 14 bis 17, dadurch gekennzeichnet, daß die Montagehilfe erst nach dem Aushärten der Füllmasse von der Wand abgenommen wird.
